(19)

Europäisches
Patentamt
European
Patent Office
Office européen
des brevets

(11)  **EP 3 929 350 B1**

(12)  **EUROPEAN PATENT SPECIFICATION**

(45) Date of publication and mention
of the grant of the patent:
**07.12.2022  Bulletin 2022/49**

(21) Application number: **21154951.4**

(22) Date of filing: **03.02.2021**

(51) International Patent Classification (IPC):
***D06H 7/16*** *(2006.01)*     ***B26D 5/00*** *(2006.01)*
***G06Q 10/04*** *(2012.01)*

(52) Cooperative Patent Classification (CPC):
**B26D 5/00; D06H 7/16; G06Q 10/043;**
B26D 2005/002; G05B 2219/49241

(54) **INTELLIGENT TYPESETTING METHOD, INTELLIGENT TYPESETTING SYSTEM AND INTELLIGENT CUTTING SYSTEM FOR LACE MATERIALS**

INTELLIGENTES SETZVERFAHREN, INTELLIGENTES SETZSYSTEM UND INTELLIGENTES SCHNEIDSYSTEM FÜR SPITZENMATERIALIEN

PROCÉDÉ DE COMPOSITION INTELLIGENTE, SYSTÈME DE COMPOSITION INTELLIGENTE ET SYSTÈME DE COUPE INTELLIGENTE POUR MATÉRIAUX DE DENTELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **22.06.2020   CN 202010571034**

(43) Date of publication of application:
**29.12.2021   Bulletin 2021/52**

(73) Proprietor: **Guangdong Ruizhou Technology Co.,
Ltd.
Foshan, Guangdong 528000 (CN)**

(72) Inventors:
• **GUO, Huazhong
Foshan, Guangdong 528000 (CN)**
• **GUO, Ruizhou
Foshan, Guangdong 528000 (CN)**

• **LAN, Meiqi
Foshan, Guangdong 528000 (CN)**
• **QIN, Shaofeng
Foshan, Guangdong 528000 (CN)**
• **ZHU, Chongjing
Foshan, Guangdong 528000 (CN)**
• **XIE, Jian
Foshan, Guangdong 528000 (CN)**

(74) Representative: **Sun, Yiming
HUASUN Patent- und Rechtsanwälte
Friedrichstraße 33
80801 München (DE)**

(56) References cited:
**EP-A1- 3 106 945      CN-A- 107 992 654
CN-B- 105 506 948     US-A- 5 791 215**

EP 3 929 350 B1

**Description**

**TECHNICAL FIELD**

The present invention relates to the technical field of machine vision and image processing, in particular to an intelligent typesetting method, an intelligent typesetting system and an intelligent cutting system for lace materials.

**BACKGROUND**

Lace laces generally appear on the garment, the underwear or the home textile. The lace pattern is beautiful and the lace material is transparent, so that lace is mainly used for decoration. The light-thin, soft, and fixed-poor characteristics of lace bring a large challenge encountered by the lace cutting enterprise during the cutting process.

A conventional lace cutting method is to prune the lace pattern by a worker at a location along or near the edge of the lace. Due to the soft and easy deformation characteristics of the lace material, the cutting of the lace material is a very fine work and requires the worker to cut the lace pattern very carefully. Otherwise, it is possible to damage the lace pattern very easily during cutting the lace pattern, which results in a waste of the lace material. At the same time, in the manual cutting process of the lace patterns, on one hand, a worker must stare a lace cloth for a long time, so that visual fatigue of human eyes is caused and the problem of inaccurate positioning is brought. On the other hand, a worker cuts lace patterns piece by piece, so that the cutting time is long, and the efficiency is relatively low.

As the automation technology becomes mature, the method for cutting the lace material is achieved by machine instead of labor. The method by machine requires to extract pattern contours in the lace laces, however, the fabric background of the lace laces is complex, using the existing automatic image segmentation method to extract the pattern contour cannot bring satisfactory results.

Reference document CN105506948B discloses a lace cloth cutting device. The device includes a underframe and a workbench, the workbench is fixedly arranged on the underframe, and also includes an X-axis moving gantry, a Y-axis moving slide, a head assembly, a data processor and a projection assembly for projecting a cutting track. Reference document CN107992654A discloses an intelligent typesetting method. In the method, the preprocessing unit reads the bridge structure process diagram and obtains the part information required by the bridge structure process diagram; the input unit sends the plate specification and part information to the processing unit, and the part information is manually input or obtained by the input unit from the preprocessing unit; the processing unit performs typesetting according to the plate specification and part information, and sends the typesetting result to the output module; wherein the typesetting includes nested typesetting; the output module generates the typesetting result into a cutting program. Reference document EP3106945A1 discloses a method for preparing machine cutting in sheet material. The method includes the steps of obtaining a set of geometries to be cut, positioning the set of geometries for cutting and thereafter deciding on a format of sheet material based on the positioned geometries. Reference document US005791215A discloses a method of re-entrant cutting of patterned fabrics having at least one pre-existing pattern formed thereon. The method includes the steps of providing a cutting apparatus, positioning said patterned fabric on said support surface, scanning at least a selected area of said patterned fabric, and cutting said patterned fabric with said fabric cutting means.

**SUMMARY**

The technical problem to be solved by the present invention is to provide an intelligent typesetting method and system for lace materials, which can reduce the complexity of typesetting, and realize the optimized arrangement of the outer cutting piece and the inner cutting piece.

The technical problem to be solved by the present invention is further to provide an intelligent cutting system for lace materials, which can realize full-automatic feeding and cutting for lace materials, and is high in automation degree.

In order to solve the above technical problem, the present invention provides an intelligent typesetting method for lace materials, including: acquiring a lace pattern and a lace cutting piece in real time, wherein the lace cutting piece includes an outer cutting piece and an inner cutting piece; identifying all waveband points on the lace pattern according to a preset waveband point; arranging the outer cutting piece on the lace pattern according to the waveband points, setting the area where the external cutting pieces are arranged on the lace pattern as a defective area; and arranging the inner cutting piece on a non-defective area of the lace pattern.

As an improvement to the above scheme, the step of identifying all waveband points on the lace pattern according to a preset waveband point includes: acquiring a first low waveband point, a second low waveband point and a third low waveband point set by a user, wherein the first low waveband point and the second low waveband point are arranged on one side of the lace pattern, a pattern between the first low waveband point and the second low waveband point is a complete circulation unit, and the third low waveband point is arranged on the other side of the lace pattern; identifying all waveband points on the lace pattern according to the first low waveband point, the second low waveband point, and the third low waveband point.

As an improvement to the above scheme, the step of arranging the outer cutting piece on the lace pattern according to the waveband points includes: arranging the outer cutting piece on the lace pattern based on a preset distance according to the waveband points.

As an improvement to the above scheme, the step of arranging the inner cutting piece on the non-defective area of the lace pattern includes: performing external expansion processing on the outer contour of the inner cutting piece; performing simplified processing on outer contour vertices of the inner cutting piece; performing outer contour overlapping judgment on the inner cutting pieces by using a NFP algorithm; generating a critical polygon from the inner cutting piece by using a Minkowski Difference algorithm; enabling the inner cutting piece to be located inside the lace pattern and generating an inner polygon of the inner cutting piece by using an IFP algorithm; deleting the critical polygon generated from the inner cutting piece relative to the defective area from the inner polygon to make the inner cutting piece and the defective areas non-overlapping; arranging the inner cutting pieces one by one, wherein a current solution is always kept feasible in the arranging process; and adjusting a position and a rotation angle of the inner cutting piece according to an evaluation index.

As an improvement to the above scheme, the step of adjusting a position and a rotation angle of the inner cutting piece according to an evaluation index includes: initially sorting the inner cutting pieces to generate an initial sequence, judging whether the initial sequence is generated; if yes, ending the sorting; if no, adjusting the evaluation index, performing local searching to place the inner cutting pieces, and then judging whether the initial sequence is generated.

As an improvement to the above scheme, a ranking criteria for the initial sequence includes: placing the inner cutting pieces according to areas of the inner cutting pieces from large to small; when the areas of the inner cutting pieces are equal, placing the inner cutting pieces according to minimum outer wrapping rectangular areas of the inner cutting pieces from large to small; when the minimum outer wrapping rectangular areas of the inner cutting pieces are equal, placing the inner cutting pieces according to circumferences of the inner cutting pieces from large to small; and when the circumferences of the inner cutting pieces are equal, placing the inner cutting pieces according to irregularities of the inner cutting pieces from high to low.

As an improvement to the above scheme, adjusting the evaluation index *OriginalScore* is according to the following formula,

$$OriginalScore = \begin{cases} 0.001c_0 + c_1, & \text{a length of a lace material has been used } < L/\gamma_2 \\ c_0 + c_1, & \text{a length of a lace material has been used } \geq L/\gamma_2 \end{cases},$$

wherein, $C_0$ is a position index and $C_0$ = a length of a lace material has been used / a length of the inner cutting piece, $C_1$ is a fit index and $C_1 = -\gamma_1*$ (an intersection area of outer contours of the inner cutting pieces + an intersection area of boundary outer contours of the inner cutting pieces)/( the circumference of the inner cutting piece $\times$ a length of a lace material has been used), $\gamma_1$ is a fit weight, L is a 100% utilization corresponding to the length of a lace material, and $\gamma_2$ is an estimated utilization.

Correspondingly, the present invention further provides an intelligent typesetting system 3 for lace materials, including: an obtaining module 31, configured to acquire a lace pattern and a lace cutting piece in real time, wherein the lace cutting piece includes an outer cutting piece and an inner cutting piece; a positioning module 32, configured to identify all waveband points on the lace pattern according to a preset waveband point; an outer cutting piece arranging module 33, configured to arrange the outer cutting piece on the lace pattern according to the waveband points and set the area where the external cutting pieces are arranged on the lace pattern as a defective area; and an inner cutting piece arranging module 34, configured to arrange the inner cutting piece on a non-defective area of the lace pattern.

As an improvement to the above scheme, the inner cutting piece arranging module 34 includes: an external expansion unit 341, configured to perform external expansion processing on the outer contour of the inner cutting piece; a simplified unit 342, configured to perform simplified processing on outer contour vertices of the inner cutting piece; a judging unit 343, configured to perform outer contour overlapping judgment on the inner cutting pieces by using a NFP algorithm; a NFC generating unit 344, configured to generate a critical polygon from the inner cutting piece by using a Minkowski Difference algorithm; an IFP generating unit 345, configured to enable the inner cutting piece to be located inside the lace pattern and generate an inner polygon of the inner cutting piece by using an IFP algorithm; a deleting unit 346, configured to delete the critical polygon generated from the inner cutting piece relative to the defective area from the inner polygon to make the inner cutting piece and the defective areas non-overlapping; an arranging unit 347, configured to arrange the inner cutting pieces one by one, wherein a current solution is always kept feasible in the arranging process; and an adjusting unit 348, configured to adjust a position and a rotation angle of the inner cutting piece according to an evaluation index.

Correspondingly, the present invention further provides an intelligent cutting system for lace materials, including: a feeding device for coiled materials 1, a conveying device for coiled materials 6, an image scanning and collecting device 2, an intelligent typesetting system 3, an image projection device 4 and a cutting device for coiled materials 5; the feeding device for coiled materials 1, configured to deliver a lace material to the conveying device for coiled materials 6; the image scanning and collecting device 2, configured to scan the lace material on the conveying device for coiled materials 6 to generate a lace pattern and upload the lace pattern to the intelligent typesetting system 3; the intelligent typesetting system 3, configured to generate a typesetting image and send the typesetting image to the image projection device 4 and the cutting device for coiled materials 5; the image projection device 4, configured to project the typesetting image on the lace material on the conveying device for coiled materials 6; and the cutting device for coiled materials 5, configured to cut the lace material according to the typesetting image.

The present invention has the following beneficial effects:
According to the intelligent typesetting method for lace materials, the lace cutting piece is divided into an outer cutting piece and an inner cutting piece, and the outer cutting piece and the inner cutting piece are respectively typeset; in particular, the present invention introduces the concept of defective area and adopts the method that the outer cutting pieces are preferably arranged, so that the area arranged with the outer cutting pieces is set as a defective area after the outer cutting pieces are ensured to maximize typesetting; then the inner cutting piece is arranged in the non-defective area, so that the inner cutting piece is individually arranged; the complexity of the typesetting is greatly reduced and the optimized arrangement of the outer cutting piece and the inner cutting piece is realized.

Meanwhile, the intelligent cutting system for lace materials combines automatic feeding, intelligent typesetting with automatic cutting technology, so that full-automatic feeding and cutting for lace materials are realized, the automation degree is high, and the problem on the fatigue degree and deviation of traditional laser manual swinging materials is solved.

## BRIEF DESCRIPTION OF DRAWINGS

FIG. 1 is a flow chart of an embodiment of an intelligent typesetting method for lace materials of the present invention;

FIG. 2 is a schematic diagram of an outer cutting piece and an inner cutting piece of the present invention;

FIG. 3 is a schematic diagram of arranging an outer cutting piece on a lace pattern according to waveband points of the present invention;

FIG. 4 is a flow chart of an embodiment of arranging an inner cutting piece on a non-defective area of a lace pattern of the present invention;

FIG. 5 is a schematic diagram of performing external expansion processing and simplified processing of the present invention;

FIG. 6 is a schematic diagram of generating a critical polygon of the inner cutting piece of the present invention;

FIG. 7 is a schematic diagram of deleting the critical polygons of the inner cutting piece and the defective area from the inner polygon of the present invention;

FIG. 8 is a flow chart of an embodiment of adjusting a position and a rotation angle of the inner cutting piece according to an evaluation index of the present invention;

FIG. 9 is a schematic structural diagram of an intelligent cutting system for lace materials of the present invention;

FIG. 10 is a schematic structural diagram of an intelligent typesetting system for lace materials of the present invention;

FIG. 11 is a schematic structural diagram of an inner cutting piece arranging module of the present invention.

## DETAILED DESCRIPTION

In order to make the objectives, technical solutions, and advantages of the present invention clearer and more comprehensible, the present invention is described in further detail below with reference to the embodiments and ac-

companing drawings.

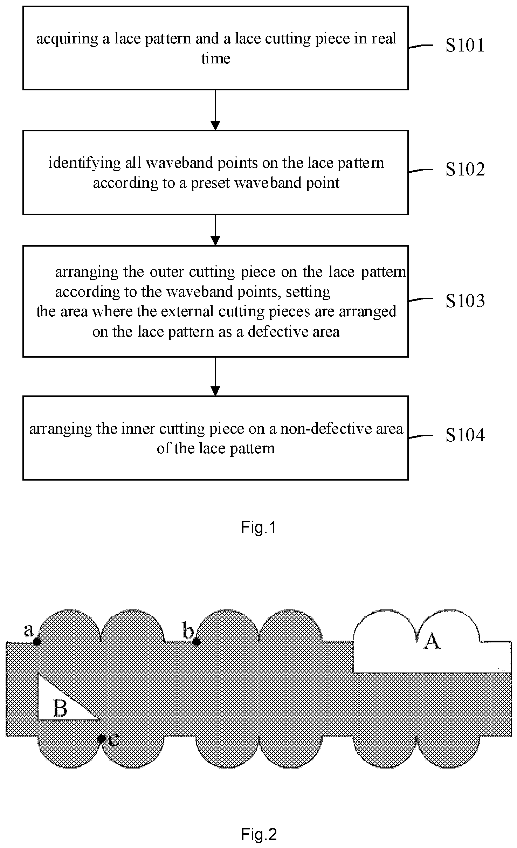

Referring to FIG. 1, a flow chart of an embodiment of an intelligent typesetting method for lace materials of the present invention is shown:

S101, acquiring a lace pattern and a lace cutting piece in real time;

It should be noted that the lace cutting piece includes an outer cutting piece and an inner cutting piece, wherein the outer cutting piece refers to a cutting piece with external corrugations in the lace pattern, and the inner cutting piece refers to a cutting piece without external corrugations in the lace pattern.

As shown in FIG. 2, the A cutting piece in FIG. 2 is an outer cutting piece and the B cutting piece is an inner cutting piece.

S102, identifying all waveband points on the lace pattern according to a preset waveband point;

Specifically, the step of identifying all waveband points on the lace pattern according to a preset waveband point includes:

(1) acquiring a first low waveband point, a second low waveband point and a third low waveband point set by a user; wherein the first low waveband point and the second low waveband point are arranged on one side of the lace pattern, the pattern between the first low waveband point and the second low waveband point is a complete circulation unit, and the third low waveband point is arranged on the other side of the lace pattern;

(2) identifying all waveband points on the lace pattern according to the first low waveband point, the second low waveband point, and the third low waveband point.

It should be noted that after acquiring the lace pattern uploaded by the image scanning and collecting device, the user may set the first low waveband point, the second low waveband point and the third low waveband point according to the actual situation. Through the setting of the first low waveband point, the second low waveband point and the third low waveband point, the circulation unit of the lace pattern and the length and the width of each circulation unit can be conveniently identified, so that all waveband points on the lace pattern can be determined according to the positions and characteristics of the first low waveband point, the second low waveband point and the third low waveband point.

As shown in FIG. 2, the point a in FIG. 2 is the first low waveband point, the point b is the second low waveband point, and the point c is the third low waveband point.

S103, arranging the outer cutting piece on the lace pattern according to the waveband points, setting the area where the external cutting piece is arranged on the lace pattern as a defective area;

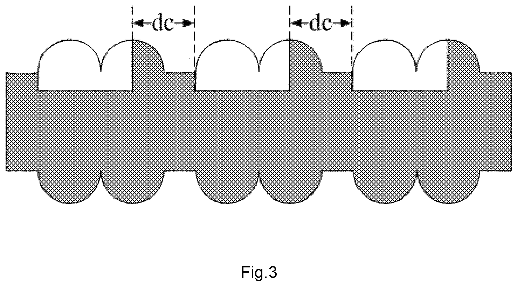

As shown in FIG. 3, the outer cutting piece can be arranged on the lace pattern based on a preset distance dc according to the waveband points, so as to ensure that the external corrugations of the outer cutting piece are consistent.

S104, arranging the inner cutting piece on the non-defective area of the lace pattern;

when cutting the lace pattern, it is necessary to consider reserving the external corrugations of the lace pattern and realizing the maximum utilization rate of the lace pattern. Therefore, the present invention designs a unique intelligent typesetting method for the specificity of the lace pattern. Unlike the prior art, in the present invention, the lace cutting piece is divided into an outer cutting piece and an inner cutting piece, and the outer cutting piece and the inner cutting piece are respectively typeset; in particular, the present invention introduces the concept of defective area and adopts the method that the outer cutting pieces are preferably arranged, so that the area arranged with the outer cutting pieces is set as a defective area after the outer cutting pieces are ensured to maximize typesetting; then the inner cutting piece is arranged in the non-defective area, so that the inner cutting piece is individually arranged; the complexity of the typesetting is greatly reduced and the optimized arrangement of the outer cutting piece and the inner cutting piece is realized.

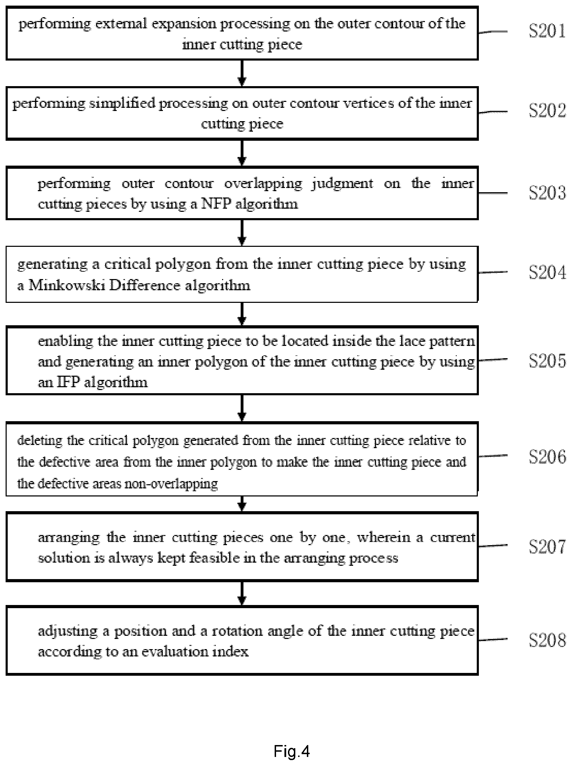

Referring to FIG. 4, FIG. 4 shows the step of arranging the inner cutting piece on the non-defective area of the lace pattern, including:

S201, performing external expansion processing on the outer contour of the inner cutting piece;

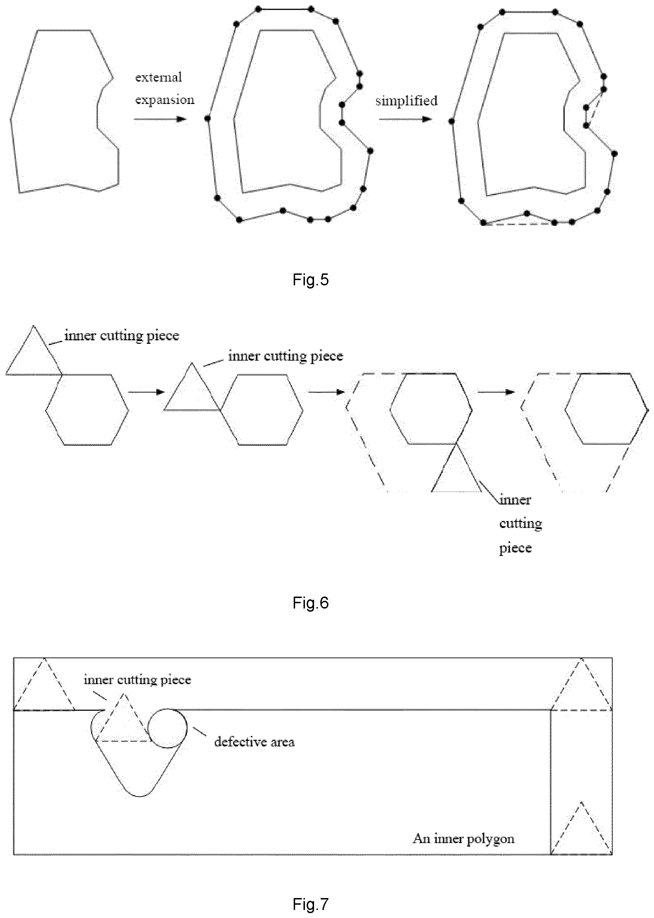

As shown in FIG. 5, in order to ensure the minimum spacing d between the inner cutting pieces, the outer contour of the inner cutting piece is expanded d/2.

S202, performing simplified processing on outer contour vertices of the inner cutting piece;

As shown in FIG. 5, the vertices of the inner cutting piece are simplified by using an algorithm of inner concave vertex simplification based on critical area to increase the solving speed.

S203, performing outer contour overlapping judgment on the inner cutting pieces by using a NFP algorithm; judging the overlapping between the inner cutting pieces by using NFP (No-fit Polygon).

S204, generating a critical polygon from the inner cutting piece by using a Minkowski Difference algorithm (see FIG. 6);

S205, enabling the inner cutting piece to be located inside the lace pattern and generating an inner polygon of the inner cutting piece by using an IFP (Inner-fit Polygon) algorithm;

S206, deleting the critical polygon generated from the inner cutting piece relative to the defective area from the inner polygon to make the inner cutting piece and the defective areas non-overlapping (see FIGs. 6 and 7);

S207, arranging the inner cuttings piece one by one, wherein a current solution is always kept feasible in the arranging process;

S208, adjusting a position and a rotation angle of the inner cutting piece according to an evaluation index.

Therefore, after performing external expansion and simplified processing on the outer contour of the inner cutting piece, the NFP algorithm, the Minkowski difference algorithm and the IFP algorithm are fused to arrange the position of the inner cutting piece, and then optimization adjustment, strong flexibility and adaptability of the inner cutting piece are achieved by continuously optimizing the evaluation index.

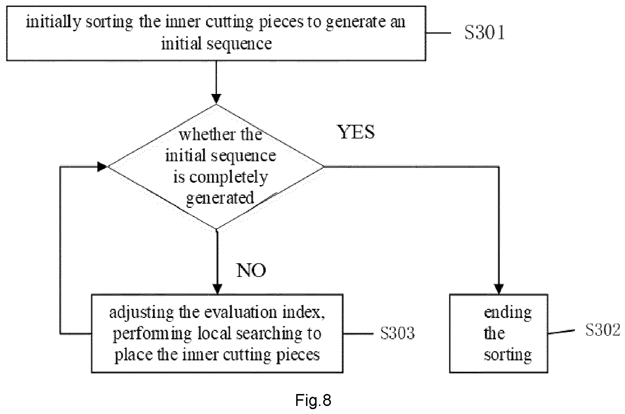

Referring to FIG. 8, FIG. 8 shows the step of adjusting a position and a rotation angle of the inner cutting piece according to an evaluation index, including:

S301, initially sorting the inner cutting pieces to generate an initial sequence, judging whether the initial sequence is generated;

In particular, the ranking criteria for the initial sequence includes:

(1) placing the inner cutting pieces according to areas of the inner cutting pieces from large to small; that is, the inner cutting piece with large area is preferably considered.

(2) when the areas of the inner cutting pieces are equal, placing the inner cutting pieces according to minimum outer wrapping rectangular areas of the inner cutting pieces from large to small; that is, the inner cutting piece with large minimum outer wrapping rectangular area is preferably considered.

(3) when the minimum outer wrapping rectangular areas of the inner cutting pieces are equal, placing the inner cutting pieces according to circumferences of the inner cutting pieces from large to small; that is, the complexity is higher when the circumference of the inner cutting piece with the same area is larger. Therefore, the inner cutting piece with the large circumference is preferably considered.

(4) when the circumferences of the inner cutting pieces are equal, placing the inner cutting pieces according to irregularities of the inner cutting pieces from high to low. That is, the irregularity = the area of the inner cutting piece $\times$ (1- the area of the inner cutting piece / the outer wrapping rectangular area of the inner cutting piece), the inner cutting piece with relatively large irregularity is preferably considered.

S302, if yes, ending the sorting;
S303, if no, adjusting the evaluation index, performing local searching to place the inner cutting pieces, and then judging whether the initial sequence is generated.

Adjusting the evaluation index *OriginalScore* is according to the following formula,

$$OriginalScore = \begin{cases} 0.001c_0 + c_1, & \text{a length of a lace material has been used } < L/\gamma_2 \\ c_0 + c_1, & \text{a length of a lace material has been used } \geq L/\gamma_2 \end{cases},$$

wherein, C0 is a position index and C0 = a length of a lace material has been used / a length of the inner cutting piece, C1 is a fit index and C1 =-γ1* (an intersection area of outer contours of the inner cutting pieces + an intersection area of boundary outer contours of the inner cutting pieces)/( the circumference of the inner cutting piece $\times$ a length of a lace material has been used), wherein a boundary outer contour of the inner cutting pieces is a boundary of the critical polygon, γ1 is a fit weight, L is a 100% utilization corresponding to the length of a lace material, for example, if the lace material is completely used to sort all the cutting pieces, the utilization is 100%, and γ2 is an estimated utilization.

It should be noted that each optimization adjustment is performed on the basis of a set of initial sequences.

Different from the prior art, the unique ranking criterion is constructed for the specificity of the lace cutting piece, and the optimal arrangement of the inner cutting pieces is effectively realized by adjusting the evaluation index.

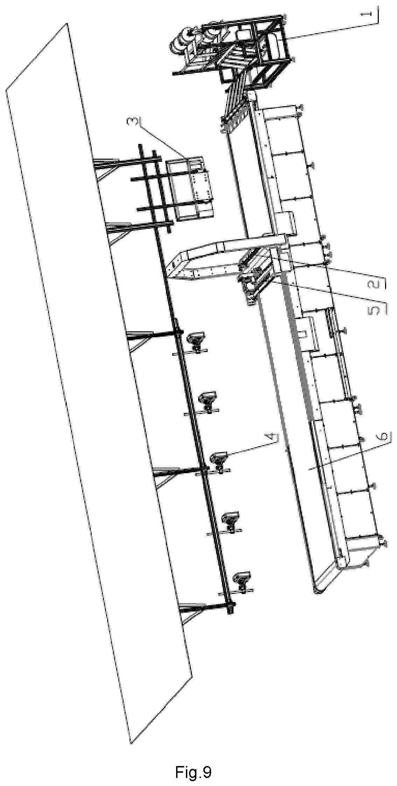

Referring to FIG. 9, FIG. 9 shows a specific structure of the intelligent cutting system for lace materials of the present invention, including: a feeding device for coiled materials 1, a conveying device for coiled materials 6, an image scanning and collecting device 2, an intelligent typesetting system 3, an image projection device 4 and a cutting device for coiled materials 5; in particular:

the feeding device for coiled materials 1, configured to deliver a lace material to the conveying device for coiled materials 6;

the image scanning and collecting device 2, configured to scan the lace material on the conveying device for coiled materials 6 to generate a lace pattern and upload the lace pattern to the intelligent typesetting system 3;

the intelligent typesetting system 3, configured to generate a typesetting image and send the typesetting image to the image projection device 4 and the cutting device for coiled materials 5;

the image projection device 4, configured to project the typesetting image on the lace material on the conveying device for coiled materials 6;

the cutting device for coiled materials 5, configured to cut the lace material according to the typesetting image.

In operation, the feeding device for coiled materials 1 delivers a lace material to the conveying device for coiled materials 6, so that the lace material is laid flat on the conveying device for coiled materials 6; At the same time, the image scanning and collecting device 2 scans the lace material on the conveying device for coiled materials 6 in real time to generate a lace pattern and upload the lace pattern to the intelligent typesetting system 3; the intelligent typesetting system 3 generates a typesetting image according to the lace pattern and the lace cutting piece to be arranged and sends the typesetting image to the image projection device 4 and the cutting device for coiled materials 5; the image projection device 4 projects the typesetting image on the lace material on the conveying device for coiled materials 6 for a person to distinguish between the coiled material cut by the cutting device for coiled materials 5 and a preset typesetting image; and simultaneously the cutting device for coiled materials 5 cuts the lace material according to the typesetting image. Therefore, full-automatic feeding and cutting for lace materials are achieved, and the automation degree is high.

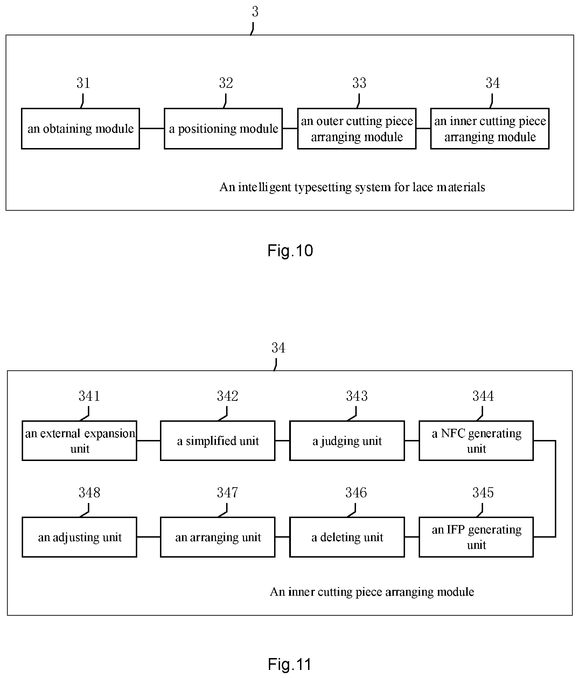

Referring to FIG. 10, an intelligent typesetting system 3 for lace materials, including:

an obtaining module 31, configured to acquire a lace pattern and a lace cutting piece in real time, wherein the lace cutting piece includes an outer cutting piece and an inner cutting piece; wherein the outer cutting piece refers to a cutting piece with external corrugations in the lace pattern, and the inner cutting piece refers to a cutting piece without external corrugations in the lace pattern.

a positioning module 32, configured to identify all waveband points on the lace pattern according to a preset waveband point; in particular, the positioning module 32 is configured to acquire a first low waveband point, a second low waveband point and a third low waveband point set by a user, and identify all waveband points on the lace pattern according to the first low waveband point, the second low waveband point, and the third low waveband point. It should be noted that after acquiring the lace pattern uploaded by the image scanning and collecting device, the user may set the first low waveband point, the second low waveband point and the third low waveband point according to the actual situation. Through the setting of the first low waveband point, the second low waveband point and the third low waveband point, the circulation unit of the lace pattern and the length and the width of each circulation unit can be conveniently identified, so that all waveband points on the lace pattern can be determined according to the positions and characteristics of the first low waveband point, the second low waveband point and the third low waveband point.

an outer cutting piece arranging module 33, configured to arrange the outer cutting piece on the lace pattern according to the waveband points and set the area where the external cutting pieces are arranged on the lace pattern as a defective area;

an inner cutting piece arranging module 34, configured to arrange the inner cutting piece on a non-defective area of the lace pattern.

Therefore, the intelligent typesetting system 3 for lace materials can typeset the outer cutting piece and the inner cutting piece respectively; in particular, the intelligent typesetting system 3 for lace materials adopts the means that the outer cutting pieces are preferably arranged, so that the area arranged with the outer cutting pieces is set as a defective area after the outer cutting pieces are ensured to maximize typesetting; then the inner cutting piece is arranged in the non-defective area, so that the inner cutting piece is individually arranged; the complexity of the typesetting is greatly reduced and the optimized arrangement of the outer cutting piece and the inner cutting piece is realized.

Referring to FIG. 11, the inner cutting piece arranging module 34, including:

an external expansion unit 341, configured to perform external expansion processing on the outer contour of the inner cutting piece;

a simplified unit 342, configured to perform simplified processing on outer contour vertices of the inner cutting piece;

a judging unit 343, configured to perform outer contour overlapping judgment on the inner cutting pieces by using a NFP algorithm;

a NFC generating unit 344, configured to generate a critical polygon from the inner cutting piece by using a Minkowski Difference algorithm;

an IFP generating unit 345, configured to enable the inner cutting piece to be located inside the lace pattern and generate an inner polygon of the inner cutting piece by using an IFP algorithm;

a deleting unit 346, configured to delete the critical polygon generated from the inner cutting piece relative to the defective area from the inner polygon to make the inner cutting piece and the defective areas non-overlapping;

an arranging unit 347, configured to arrange the inner cutting pieces one by one, wherein a current solution is always kept feasible in the arranging process;

an adjusting unit 348, configured to adjust a position and a rotation angle of the inner cutting piece according to an evaluation index.

Therefore, after performing external expansion and simplified processing on the outer contour of the inner cutting piece, the NFP algorithm, the Minkowski difference algorithm and the IFP algorithm are fused to arrange the position of the inner cutting piece, and then optimization adjustment, strong flexibility and adaptability of the inner cutting piece are achieved by continuously optimizing the evaluation index by the inner cutting piece arranging module 34.

In the present invention, the obtaining module 31 can be a processor or chip with a communication interface; the position module 32 can be a processor or chip with a communication interface, if needed, can include a display device; the outer cutting piece arranging module 33 and the inner cutting piece arranging module 34 can be a processor or controller respectively or share one processor or controller; the external expansion unit 341, the simplified unit 342, the judging unit 343, the NFC generating unit 344, the IFP generating unit 345, the deleting unit 346, the arranging unit 347 and the adjusting unit 348 can be a processor or controller respectively or share one processor or controller.

**Claims**

1. An intelligent typesetting method for lace materials, comprising:

    acquiring a lace pattern and a lace cutting piece in real time, wherein the lace cutting piece comprises an outer cutting piece and an inner cutting piece;
    **characterized in that** the method further comprises:

    identifying all waveband points on the lace pattern according to a preset waveband point; arranging the outer cutting piece on the lace pattern according to the waveband points, setting the area where the external cutting pieces are arranged on the lace pattern as a defective area; and arranging the inner cutting piece on a non-defective area of the lace pattern.

2. The intelligent typesetting method for lace materials according to claim 1, wherein the identifying all waveband points on the lace pattern according to a preset waveband point comprises:

    acquiring a first low waveband point, a second low waveband point and a third low waveband point set by a user, wherein the first low waveband point and the second low waveband point are arranged on one side of the lace pattern, a pattern between the first low waveband point and the second low waveband point is a complete circulation unit, and the third low waveband point is arranged on the other side of the lace pattern;
    identifying all waveband points on the lace pattern according to the first low waveband point, the second low waveband point, and the third low waveband point.

3. The intelligent typesetting method for lace materials according to claim 1, wherein the arranging the outer cutting piece on the lace pattern according to the waveband points comprises:
arranging the outer cutting piece on the lace pattern based on a preset distance according to the waveband points.

4. The intelligent typesetting method for lace materials according to claim 1, wherein the arranging the inner cutting piece on a non-defective area of the lace pattern comprises:

performing external expansion processing on the outer contour of the inner cutting piece;
performing simplified processing on outer contour vertices of the inner cutting piece;
performing outer contour overlapping judgment on the inner cutting pieces by using a NFP algorithm;
generating a critical polygon from the inner cutting piece by using a Minkowski Difference algorithm;
enabling the inner cutting piece to be located inside the lace pattern and generating an inner polygon of the inner cutting piece by using an IFP algorithm;
deleting the critical polygon generated from the inner cutting piece relative to the defective area from the inner polygon to make the inner cutting piece and the defective areas non-overlapping;
arranging the inner cutting pieces one by one, wherein a current solution is always kept feasible in the arranging process; and
adjusting a position and a rotation angle of the inner cutting piece according to an evaluation index.

5. The intelligent typesetting method for lace materials according to claim 4, wherein the adjusting a position and a rotation angle of the inner cutting piece according to an evaluation index comprises:

initially sorting the inner cutting pieces to generate an initial sequence, judging whether the initial sequence is generated;
if yes, ending the sorting;
if no, adjusting the evaluation index, performing local searching to place the inner cutting pieces, and then judging whether the initial sequence is generated.

6. The intelligent typesetting method for lace materials according to claim 5, wherein a ranking criteria for the initial sequence comprises:

placing the inner cutting pieces according to areas of the inner cutting pieces from large to small;
when the areas of the inner cutting pieces are equal, placing the inner cutting pieces according to minimum outer wrapping rectangular areas of the inner cutting pieces from large to small;
when the minimum outer wrapping rectangular areas of the inner cutting pieces are equal, placing the inner cutting pieces according to circumferences of the inner cutting pieces from large to small; and
when the circumferences of the inner cutting pieces are equal, placing the inner cutting pieces according to irregularities of the inner cutting pieces from high to low.

7. The intelligent typesetting method for lace materials according to claim 5, wherein adjusting the evaluation index *OriginalScore* is according to the following formula:

$$OriginalScore = \begin{cases} 0.001c_0 + c_1, & \text{a length of a lace material has been used } < L/\gamma_2 \\ c_0 + c_1, & \text{a length of a lace material has been used} \geq L/\gamma_2 \end{cases},$$

wherein, C0 is a position index and C0 = a length of a lace material has been used / a length of the inner cutting piece, C1 is a fit index and C1 = $-\gamma 1^*$ (an intersection area of outer contours of the inner cutting pieces + an intersection area of boundary outer contours of the inner cutting pieces)/( the circumference of the inner cutting piece $\times$ a length of a lace material has been used), $\gamma 1$ is a fit weight, L is a 100% utilization corresponding to the length of a lace material, and $\gamma 2$ is an estimated utilization.

8. An intelligent typesetting system (3) for lace materials, comprising:

an obtaining module (31), configured to acquire a lace pattern and a lace cutting piece in real time, wherein the lace cutting piece comprises an outer cutting piece and an inner cutting piece;

**characterized in that** the system further comprises:

a positioning module (32), configured to identify all waveband points on the lace pattern according to a preset waveband point;

an outer cutting piece arranging module (33), configured to arrange the outer cutting piece on the lace pattern according to the waveband points and set the area where the external cutting pieces are arranged on the lace pattern as a defective area; and

an inner cutting piece arranging module (34), configured to arrange the inner cutting piece on a non-defective area of the lace pattern.

9. The intelligent typesetting system (3) for lace materials according to claim 8, wherein the inner cutting piece arranging module (34) comprises:

an external expansion unit (341), configured to perform external expansion processing on the outer contour of the inner cutting piece;

a simplified unit (342), configured to perform simplified processing on outer contour vertices of the inner cutting piece;

a judging unit (343), configured to perform outer contour overlapping judgment on the inner cutting pieces by using a NFP algorithm;

a NFC generating unit (344), configured to generate a critical polygon from the inner cutting piece by using a Minkowski Difference algorithm;

an IFP generating unit (345), configured to enable the inner cutting piece to be located inside the lace pattern and generate an inner polygon of the inner cutting piece by using an IFP algorithm;

a deleting unit (346), configured to delete the critical polygon generated from the inner cutting piece relative to the defective area from the inner polygon to make the inner cutting piece and the defective areas non-overlapping;

an arranging unit (347), configured to arrange the inner cutting pieces one by one, wherein a current solution is always kept feasible in the arranging process; and

an adjusting unit (348), configured to adjust a position and a rotation angle of the inner cutting piece according to an evaluation index.

10. An intelligent cutting system for lace materials, comprising:

a feeding device for coiled materials (1), a conveying device for coiled materials (6), an image scanning and collecting device (2), an intelligent typesetting system (3) according to claims 8 or 9, an image projection device (4) and a cutting device for coiled materials (5);

the feeding device for coiled materials (1), configured to deliver a lace material to the conveying device for coiled materials (6);

the image scanning and collecting device (2), configured to scan the lace material on the conveying device for coiled materials (6) to generate a lace pattern and upload the lace pattern to the intelligent typesetting system (3);

the intelligent typesetting system (3), configured to generate a typesetting image and send the typesetting image to the image projection device (4) and the cutting device for coiled materials (5);

the image projection device (4), configured to project the typesetting image on the lace material on the conveying device for coiled materials (6); and

the cutting device for coiled materials (5), configured to cut the lace material according to the typesetting image.

**Patentansprüche**

1. Intelligentes Setzverfahren für Spitzenmaterialien, umfassend:

Erfassen eines Spitzenmusters und eines Spitzenzuschnitts in Echtzeit, wobei der Spitzenzuschnitt einen äußeren Spitzenzuschnitt und einen inneren Spitzenzuschnitt umfasst;

**dadurch gekennzeichnet, dass** das Verfahren ferner umfasst:

Identifizieren aller Wellenbereichspunkte auf dem Spitzenmuster gemäß einem voreingestellten Wellenbereichspunkt; Anordnen des äußeren Zuschnitts auf dem Spitzenmuster gemäß den Wellenbereichspunkten, wobei der Bereich, in dem die externen Zuschnitte auf dem Spitzenmuster angeordnet sind, als ein defekter Bereich eingestellt wird; und

Anordnen des inneren Zuschnitts auf einem nicht defekten Bereich des Spitzenmusters.

2. Intelligentes Setzverfahren für Spitzenmaterialien nach Anspruch 1, wobei das Identifizieren aller Wellenbereichspunkte auf dem Spitzenmuster gemäß einem voreingestellten Wellenbereichspunkt Folgendes umfasst:

Erfassen eines ersten tiefen Wellenbereichspunkts, eines zweiten tiefen Wellenbereichspunkts und eines dritten tiefen Wellenbereichspunkts, die durch einen Benutzer eingestellt wurden, wobei der erste tiefe Wellenbereichspunkt und der zweite tiefe Wellenbereichspunkt auf einer Seite des Spitzenmusters angeordnet sind, ein Muster zwischen dem ersten tiefen Wellenbereichspunkt und dem zweiten tiefen Wellenbereichspunkt eine vollständige Umkreisungseinheit ist, und der dritte tiefe Wellenbereichspunkt auf der anderen Seite des Spitzenmusters angeordnet ist;
Identifizieren aller Wellenbereichspunkte auf dem Spitzenmuster gemäß dem ersten tiefen Wellenbereichspunkt, dem zweiten tiefen Wellenbereichspunkt und dem dritten tiefen Wellenbereichspunkt.

3. Intelligentes Setzverfahren für Spitzenmaterialien nach Anspruch 1, wobei das Anordnen des äußeren Zuschnitts auf dem Spitzenmuster gemäß den Wellenbereichspunkten Folgendes umfasst:
Anordnen des äußeren Zuschnitts auf dem Spitzenmuster basierend auf einem voreingestellten Abstand gemäß den Wellenbereichspunkten.

4. Intelligentes Setzverfahren für Spitzenmaterialien nach Anspruch 1, wobei das Anordnen des inneren Zuschnitts auf einem nicht defekten Bereich des Spitzenmusters Folgendes umfasst:

Durchführen einer Außenerweiterungsbearbeitung an der Außenkontur des inneren Zuschnitts;
Durchführen einer vereinfachten Bearbeitung an Außenkontur-Eckpunkten des inneren Zuschnitts;
Durchführen einer Außenkonturüberlappungsbeurteilung an den inneren Zuschnitten unter Verwendung eines NFP-Algorithmus;
Erzeugen eines kritischen Polygons aus dem inneren Zuschnitt unter Verwendung eines Minkowski-Differenz-Algorithmus;
Ermöglichen, dass sich der innere Zuschnitt in dem Spitzenmuster befindet, und Erzeugen eines inneren Polygons des inneren Zuschnitts unter Verwendung eines IFP-Algorithmus;
Entfernen des kritischen Polygons, das aus dem inneren Zuschnitt erzeugt wurde, in Bezug auf den defekten Bereich aus dem inneren Polygon, um dafür zu sorgen, dass der innere Zuschnitt und die defekten Bereiche nicht überlappend sind;
Anordnen der inneren Zuschnitte nacheinander, wobei eine aktuelle Lösung in dem Anordnungsprozess stets machbar gehalten wird; und
Anpassen einer Position und eines Drehwinkels des inneren Zuschnitts gemäß einem Bewertungsindex.

5. Intelligentes Setzverfahren für Spitzenmaterialien nach Anspruch 4, wobei das Anpassen einer Position und eines Drehwinkels des inneren Zuschnitts gemäß einem Bewertungsindex Folgendes umfasst:

anfängliches Sortieren der inneren Zuschnitte, um eine Anfangsfolge zu erzeugen, wobei beurteilt wird, ob die Anfangsfolge erzeugt ist;
wenn ja, Beenden des Sortierens;
wenn nein, Anpassen des Bewertungsindex, Durchführen einer lokalen Suche zum Platzieren der inneren Zuschnitte, und anschließend Beurteilen, ob die Anfangsfolge erzeugt ist.

6. Intelligentes Setzverfahren für Spitzenmaterialien nach Anspruch 5, wobei ein Einstufungskriterium für die Anfangsfolge Folgendes umfasst:

Platzieren der inneren Zuschnitte gemäß Bereichen der inneren Zuschnitte von groß zu klein;
wenn die Bereiche der inneren Zuschnitte gleich sind, Platzieren der inneren Zuschnitte gemäß rechteckigen Bereichen mit minimaler äußerer Umhüllung der inneren Zuschnitte von groß zu klein;
wenn die rechteckigen Bereiche mit minimaler äußerer Umhüllung der inneren Zuschnitte gleich sind, Platzieren der inneren Zuschnitte gemäß Umfängen der inneren Zuschnitte von groß zu klein; und
wenn die Umfänge der inneren Zuschnitte gleich sind, Platzieren der inneren Zuschnitte gemäß Unregelmäßigkeiten der inneren Zuschnitte von hoch zu niedrig.

7. Intelligentes Setzverfahren für Spitzenmaterialien nach Anspruch 5, wobei das Anpassen des Bewertungsindex *OriginalScore* gemäß der folgenden Formel erfolgt:
*OriginalScore*

$$= \begin{cases} 0.001c_0 + c_1, & \text{eine Länge eines verwendeten Spitzenmaterials} < \text{L}/\gamma_2 \\ c_0 + c_1, & \text{eine Länge eines verwendeten Spitzenmaterials} \geq \text{L}/\gamma_2 \end{cases}$$

wobei C0 ein Positionsindex ist und C0 = eine Länge eines verwendeten Spitzenmaterials / eine Länge des inneren Zuschnitts, C1 ein Passgenauigkeitsindex ist und C1 = -γ1 * (ein Überschneidungsbereich von Außenkonturen der inneren Zuschnitte + ein Überschneidungsbereich von Grenzaußenkonturen der inneren Zuschnitte) / (der Umfang der inneren Zuschnitte × eine Länge eines verwendeten Spitzenmaterials), γ1 eine erste Passgenauigkeitsgewichtung ist, L eine 100%ige Ausnutzung gemäß der Länge eines Spitzenmaterials ist und γ2 eine geschätzte Ausnutzung ist.

8. Intelligentes Setzsystem (3) für Spitzenmaterialien, umfassend:

ein Erlangungsmodul (31), das konfiguriert ist, ein Spitzenmuster und einen Spitzenzuschnitt in Echtzeit zu erfassen, wobei der Spitzenzuschnitt einen äußeren Spitzenzuschnitt und einen inneren Spitzenzuschnitt umfasst;

**dadurch gekennzeichnet, dass** das System ferner Folgendes umfasst:

ein Positionierungsmodul (32), das konfiguriert ist, alle Wellenbereichspunkte auf dem Spitzenmuster gemäß einem voreingestellten Wellenbereichspunkt zu identifizieren;
ein Modul (33) zum Anordnen eines äußeren Zuschnitts, das konfiguriert ist, den äußeren Zuschnitt gemäß den Wellenbereichspunkten auf dem Spitzenmuster anzuordnen und den Bereich, in dem die externen Zuschnitte auf dem Spitzenmuster angeordnet sind, als einen defekten Bereich einzustellen; und
ein Modul (34) zum Anordnen eines inneren Zuschnitts, das konfiguriert ist, den inneren Zuschnitt auf einem nicht defekten Bereich des Spitzenmusters anzuordnen.

9. Intelligentes Setzsystem (3) für Spitzenmaterialien nach Anspruch 8, wobei das Modul (34) zum Anordnen eines inneren Zuschnitts Folgendes umfasst:

eine Außenerweiterungseinheit (341), die konfiguriert ist, eine Außenerweiterungsbearbeitung an der Außenkontur des inneren Zuschnitts durchzuführen;
eine vereinfachte Einheit (342), die konfiguriert ist, eine vereinfachte Bearbeitung an Außenkontur-Eckpunkten des inneren Zuschnitts durchzuführen;
eine Beurteilungseinheit (343), die konfiguriert ist, eine Außenkonturüberlappungsbeurteilung an den inneren Zuschnitten unter Verwendung eines NFP-Algorithmus durchzuführen;
eine NFC-Erzeugungseinheit (344), die konfiguriert ist, aus dem inneren Zuschnitt ein kritisches Polygon unter Verwendung eines Minkowski-Differenz-Algorithmus zu erzeugen;
eine IFP-Erzeugungseinheit (345), die konfiguriert ist, zu ermöglichen, dass sich der innere Zuschnitt in dem Spitzenmuster befindet, und ein inneres Polygon des inneren Zuschnitts unter Verwendung eines IFP-Algorithmus zu erzeugen;
eine Entfernungseinheit (346), die konfiguriert ist, das kritische Polygon, das aus dem inneren Zuschnitt erzeugt wurde, in Bezug auf den defekten Bereich aus dem inneren Polygon zu entfernen, um dafür zu sorgen, dass der innere Zuschnitt und die defekten Bereiche nicht überlappend sind;
eine Anordnungseinheit (347), die konfiguriert ist, die inneren Zuschnitte nacheinander anzuordnen, wobei eine aktuelle Lösung in dem Anordnungsprozess stets machbar gehalten wird; und
eine Anpassungseinheit (348), die konfiguriert ist, eine Position und einen Drehwinkel des inneren Zuschnitts gemäß einem Bewertungsindex anzupassen.

10. Intelligentes System zum Schneiden von Spitzenmaterialien, umfassend:
eine Vorrichtung (1) zum Zuführen gewickelter Materialien, eine Vorrichtung (6) zum Befördern gewickelter Materialien, eine Vorrichtung (2) zum Abtasten und Zusammentragen von Bildern, ein intelligentes Setzsystem (3) nach Anspruch 8 oder 9, eine Bildprojektionsvorrichtung (4) und eine Vorrichtung (5) zum Schneiden gewickelter Materialien;

wobei die Vorrichtung (1) zum Zuführen gewickelter Materialien konfiguriert ist, der Vorrichtung (6) zum Befördern gewickelter Materialien ein Spitzenmaterial zuzuführen;

wobei die Vorrichtung (2) zum Abtasten und Zusammentragen von Bildern konfiguriert ist, das Spitzenmaterial auf der Vorrichtung (6) zum Befördern gewickelter Materialien abzutasten, um ein Spitzenmuster zu erzeugen, und das Spitzenmuster auf das intelligente Setzsystem (3) hochzuladen;

wobei das intelligente Setzsystem (3) konfiguriert ist, ein Satzbild zu erzeugen und das Satzbild an die Bildprojektionsvorrichtung (4) und die Vorrichtung (5) zum Schneiden gewickelter Materialien zu senden;

wobei die Bildprojektionsvorrichtung (4) konfiguriert ist, das Satzbild auf das Spitzenmaterial auf der Vorrichtung (6) zum Befördern gewickelter Materialien zu projizieren; und

wobei die Vorrichtung (5) zum Schneiden gewickelter Materialien konfiguriert ist, das Spitzenmaterial gemäß dem Satzbild zu schneiden.

**Revendications**

1. Procédé de composition intelligent pour des matériaux de dentelle, comprenant :

l'acquisition d'un motif de dentelle et d'une pièce de coupe de dentelle en temps réel, dans lequel la pièce de coupe de dentelle comprend une pièce de coupe extérieure et une pièce de coupe intérieure ;
**caractérisé en ce que** le procédé comprend en outre de:

identifier tous les points de bande d'onde sur le motif en dentelle selon un point de bande d'onde prédéfini ;
disposer la pièce de coupe extérieure sur le motif de dentelle selon les points de bande d'onde, régler la zone où les pièces de découpe externes sont disposées sur le motif de dentelle comme une zone défectueuse ; et
disposer la pièce de coupe intérieure sur une zone non défectueuse du motif de dentelle.

2. Procédé de composition intelligent pour des matériaux de dentelle selon la revendication 1, dans lequel l'identification de tous les points de bande d'onde sur le motif de dentelle selon un point de bande d'onde prédéfini comprend :

l'acquisition d'un premier point de bande d'onde basse, d'un deuxième point de bande d'onde basse et d'un troisième point de bande d'onde basse définis par un utilisateur, dans lequel le premier point de bande d'onde basse et le deuxième point de bande d'onde basse sont disposés sur un côté du motif en dentelle, un motif entre le premier point de bande d'onde basse et le deuxième point de bande d'onde basse est une unité de circulation complète, et le troisième point de bande d'onde basse est disposé de l'autre côté du motif en dentelle;
l'identification de tous les points de bande d'onde sur le motif en dentelle selon le premier point de bande d'onde basse, le deuxième point de bande d'onde basse et le troisième point de bande d'onde basse.

3. Procédé de composition intelligent pour des matériaux de dentelle selon la revendication 1, dans lequel la disposition de la pièce de découpe extérieure sur le motif de dentelle selon le point de bande d'onde comprend :
la disposition de la pièce de coupe extérieure sur le motif de dentelle sur la base d'une distance prédéfinie selon les points de bande d'onde.

4. Procédé de composition intelligent pour des matériaux de dentelle selon la revendication 1, dans lequel la disposition de la pièce de coupe intérieure sur une zone non défectueuse du motif de dentelle comprend de :

effectuer un traitement d'expansion externe sur le contour extérieur de la pièce de coupe intérieure ;
effectuer un traitement simplifié sur les sommets du contour extérieur de la pièce de coupe intérieure ;
effectuer une estimation de chevauchement de contour extérieur sur les pièces de coupe intérieures à l'aide d'un algorithme NFP ;
générer un polygone critique à partir de la pièce de coupe intérieure à l'aide d'un algorithme de différence de Minkowski ;
permettre à la pièce de découpe intérieure d'être située à l'intérieur du motif de dentelle et de générer un polygone intérieur de la pièce de découpe intérieure à l'aide d'un algorithme IFP ;
supprimer le polygone critique généré à partir de la pièce de coupe intérieure par rapport à la zone défectueuse du polygone intérieur pour que la pièce de coupe intérieure et les zones défectueuses ne se chevauchent pas ;
disposer les pièces de coupe intérieures une par une, dans une solution actuelle étant toujours gardée réalisable dans le processus d'agencement ; et
régler une position et un angle de rotation de la pièce de coupe intérieure selon un indice d'évaluation.

5. Procédé de composition intelligent pour des matériaux de dentelle selon la revendication 4, dans lequel le réglage d'une position et d'un angle de rotation de la pièce de coupe intérieure selon un indice d'évaluation comprend de :

trier initialement les pièces de coupe intérieures pour générer une séquence initiale, estimer si la séquence initiale est générée ;
si c'est le cas, terminer le tri ;
si ce n'est pas le cas, ajuster l'indice d'évaluation, effectuer une recherche locale pour placer les pièces de coupe intérieures, puis estimer si la séquence initiale est générée.

6. Procédé de composition intelligente de matériaux de dentelle selon la revendication 5, dans lequel un critère de classement pour la séquence initiale comprend de :

placer les pièces de coupe intérieures selon les zones des pièces de coupe intérieures de grande à petite;
lorsque les surfaces des pièces de coupe intérieures sont égales, placer les pièces de coupe intérieures selon des zones rectangulaires d'enveloppement extérieur minimum des pièces de coupe intérieures de grande à petite;
lorsque les zones rectangulaires d'enveloppement extérieur minimales des pièces de coupe intérieures sont égales, placer les pièces de coupe intérieures selon les circonférences des pièces de coupe intérieures de grande à petite ; et
lorsque les circonférences des pièces de coupe intérieures sont égales, placer les pièces de coupe intérieures selon les irrégularités des pièces de coupe intérieures de haut en bas.

7. Procédé de composition intelligent pour des matériaux de dentelle selon la revendication 5, dans lequel le réglage de l'indice d'évaluation *Original/Score* est conforme à la formule suivante :

$$OriginalScore = \begin{cases} 0.001c_0 + c_1, & \text{une longueur de dentelle a été utilisée} < L/\gamma_2 \\ c_0 + c_1, & \text{une longueur de dentelle a été utilisée} \geq L/\gamma_2 \end{cases}$$

dans lequel CO est un indice de position et CO = une longueur d'un matériau de dentelle a été utilisé/ une longueur de la pièce de coupe intérieure, C1 est un indice d'ajustement et C1=-y1* (une zone d'intersection des contours extérieurs des pièces de coupe intérieures + une zone d'intersection des contours extérieurs des limites des pièces de coupe intérieures)/(la circonférence de la pièce de coupe intérieure $\times$ une longueur d'un matériau de dentelle a été utilisée), y1 est une pondération d'ajustement, L est une utilisation à 100 % correspondant à la longueur d'un matériau de dentelle, et Y2 est une utilisation estimée.

8. Système de composition intelligent (3) pour des matériaux de dentelle, comprenant :

un module d'obtention (31), configuré pour acquérir un motif de dentelle et une pièce de coupe de dentelle en temps réel, dans lequel la pièce de coupe de dentelle comprend une pièce de coupe extérieure et une pièce de coupe intérieure ;
**caractérisé en ce que** le système comprend en outre :

un module de positionnement (32), configuré pour identifier tous les points de bande d'onde sur le motif en dentelle selon un point de bande d'onde prédéfini ;
un module d'agencement de pièce de coupe externe (33), configuré pour disposer la pièce de coupe externe sur le motif en dentelle selon les points de bande d'onde et définir la zone où les pièces de coupe externes sont agencées sur le motif en dentelle comme une zone défectueuse ; et
un module d'agencement de pièce de coupe intérieure (34), configuré pour disposer la pièce de coupe intérieure sur une zone non défectueuse du motif de dentelle.

9. Système de composition intelligent (3) pour des matériaux de dentelle selon la revendication 8, dans lequel le module d'agencement de pièce de coupe intérieure (34) comprend :

une unité d'expansion externe (341), configurée pour effectuer un traitement d'expansion externe sur le contour extérieur de la pièce de coupe intérieure ;
une unité simplifiée (342), configurée pour effectuer un traitement simplifié sur le contour extérieur de la pièce de coupe intérieure ;

une unité d'estimation (343), configurée pour effectuer une estimation de chevauchement de contour extérieur sur les pièces de coupe intérieures à l'aide d'un algorithme NFP ;

une unité de génération NFC (344), configurée pour générer un polygone critique à partir de la pièce de coupe intérieure à l'aide d'un algorithme de différence de Minkowski ;

une unité de génération d'IFP (345), configurée pour permettre à la pièce de coupe intérieure d'être située à l'intérieur du motif de dentelle et de générer un polygone intérieur de la pièce de coupe intérieure à l'aide d'un algorithme IFP ;

une unité de suppression (346), configurée pour supprimer le polygone critique généré à partir de la pièce de coupe interne par rapport à la zone défectueuse du polygone interne pour faire en sorte que la pièce de coupe intérieure et les zones défectueuses ne se chevauchent pas ;

une unité d'agencement (347), configurée pour disposer les pièces de coupe intérieures une par une, dans laquelle une solution actuelle est toujours gardée réalisable dans le processus d'agencement ; et

une unité de réglage (348), configurée pour régler une position et un angle de rotation de la pièce de coupe intérieure selon un indice d'évaluation.

10. Système de coupe intelligent pour les matériaux de dentelle, comprenant :

un dispositif d'alimentation de matériaux enroulés (1), un dispositif de transport de matériaux enroulés (6), un dispositif de balayage et de collecte d'images (2), un système de composition intelligent (3) selon les revendications 8 ou 9, un dispositif de projection d'images (4) et un dispositif de coupe pour matériaux enroulés (5) ;

le dispositif d'alimentation pour matériaux enroulés (1), configuré pour délivrer un matériau de dentelle au dispositif de transport pour matériaux enroulés (6) ;

le dispositif de balayage et de collecte d'images (2), configuré pour balayer le matériau de dentelle sur le dispositif de transport pour matériaux enroulés (6) afin de générer un motif de dentelle et de télécharger le motif de dentelle vers le système de composition intelligent (3) ;

le système de composition intelligent (3), configuré pour générer une image de composition et envoyer l'image de composition au dispositif de projection d'image (4) et au dispositif de découpe pour matériaux enroulés (5) ;

le dispositif de projection d'image (4), configuré pour projeter l'image de composition sur le matériau de dentelle sur le dispositif de transport pour matériaux enroulés (6) ; et

le dispositif de coupe pour matériaux enroulés (5), configuré pour couper le matériau de dentelle selon l'image de composition.

acquiring a lace pattern and a lace cutting piece in real time — S101

identifying all waveband points on the lace pattern according to a preset waveband point — S102

arranging the outer cutting piece on the lace pattern according to the waveband points, setting
the area where the external cutting pieces are arranged on the lace pattern as a defective area — S103

arranging the inner cutting piece on a non-defective area of the lace pattern — S104

Fig.1

Fig.2

Fig.3

performing external expansion processing on the outer contour of the inner cutting piece — S201

performing simplified processing on outer contour vertices of the inner cutting piece — S202

performing outer contour overlapping judgment on the inner cutting pieces by using a NFP algorithm — S203

generating a critical polygon from the inner cutting piece by using a Minkowski Difference algorithm — S204

enabling the inner cutting piece to be located inside the lace pattern and generating an inner polygon of the inner cutting piece by using an IFP algorithm — S205

deleting the critical polygon generated from the inner cutting piece relative to the defective area from the inner polygon to make the inner cutting piece and the defective areas non-overlapping — S206

arranging the inner cutting pieces one by one, wherein a current solution is always kept feasible in the arranging process — S207

adjusting a position and a rotation angle of the inner cutting piece according to an evaluation index — S208

Fig.4

external
expansion

simplified

Fig.5

inner cutting piece

inner cutting piece

inner
cutting
piece

Fig.6

inner cutting piece

defective area

An inner polygon

Fig.7

initially sorting the inner cutting pieces to generate an initial sequence — S301

whether the initial sequence is completely generated

YES

NO

adjusting the evaluation index, performing local searching to place the inner cutting pieces — S303

ending the sorting — S302

Fig.8

Fig.9

3

| an obtaining module | a positioning module | an outer cutting piece arranging module | an inner cutting piece arranging module |

31        32        33        34

An intelligent typesetting system for lace materials

Fig.10

34

| an external expansion unit | a simplified unit | a judging unit | a NFC generating unit |

341        342        343        344

| an adjusting unit | an arranging unit | a deleting unit | an IFP generating unit |

348        347        346        345

An inner cutting piece arranging module

Fig.11

**REFERENCES CITED IN THE DESCRIPTION**

**Patent documents cited in the description**

- CN 105506948 B
- CN 107992654 A
- EP 3106945 A1
- US 005791215 A